Europäisches Patentamt

European Patent Office

Office européen des brevets

(19)

(11) Numéro de publication: **0 097 170**
**B1**

## FASCICULE DE BREVET EUROPEEN

(12)

(45) Date de publication du fascicule du brevet:
**02.04.86**

(51) Int. Cl.⁴: **H 02 K 51/00**

(21) Numéro de dépôt: **82903456.0**

(22) Date de dépôt: **18.11.82**

(86) Numéro de dépôt international:
**PCT/FR 82/00194**

(87) Numéro de publication internationale:
**WO 83/02043 (09.06.83** Gazette 83/14)

(54) **MACHINE ELECTRIQUE TOURNANTE FORMANT NOTAMMENT VARIATEUR DE VITESSE OU CONVERTISSEUR DE COUPLE.**

(30) Priorité: **25.11.81 FR 8122080**

(43) Date de publication de la demande:
**04.01.84 Bulletin 84/1**

(45) Mention de la délivrance du brevet:
**02.04.86 Bulletin 86/14**

(84) Etats contractants désignés:
**BE CH DE GB LI NL SE**

(56) Documents cités:
**FR - A - 824 850**
**FR - A - 1 438 037**
**FR - A - 2 042 795**
**GB - A - 481 157**
**US - A - 3 683 249**
**US - A - 3 728 600**

(73) Titulaire: **Cibié, Pierre, 145 Avenue du Roule,
F-92200 Neuilly sur Seine (FR)**

(72) Inventeur: **Cibié, Pierre, 145 Avenue du Roule,
F-92200 Neuilly sur Seine (FR)**

(74) Mandataire: **Jolly, Jean-Pierre et al, Cabinet BROT et
JOLLY 83, rue d'Amsterdam, F-75008 Paris (FR)**

ACTORUM AG

# Description

L'invention concerne les machines électriques tournantes.

Par les brevets US N° 3683249, GB N° 481157 et FR N° 2042795, on connaît déjà des machines électriques tournantes formant variateur de vitesse. On connaît également le variateur de vitesse dit Electron-Auxilec qui est vendu en France par la Société Thomson-Lucas. Ce variateur est du type comprenant un stator à s paires de pôles, et un rotor central à p paires de pôles et un rotor intermédiaire comprenant, au niveau de sa face intérieure, au moins un circuit électrique secondaire subissant le champ du stator.

Dans tous ces variateurs, la variation de vitesse est obtenue par glissement à couple sensiblement constant. Quoique susceptibles de rendre de sérieux services par ailleurs, ces machines ont cependant l'inconvénient d'avoir un mauvais rendement, au mieux égal à $\frac{N_2}{N_1}$, $N_1$ étant la vitesse d'entrée et $N_2$ la vitesse de sortie. Ce faible rendement s'explique par le fait que ces variateurs sont pourvus d'un dispositif de commutation qui coopère avec le rotor intermédiaire au moyen de bagues tournantes et de balais. Or, comme on le sait, toutes les pertes du rotor sont dissipées par effet Joule. Etant donné que les balais et les bagues tournantes augmentent la résistance ohmique du circuit, les pertes y seront plus importantes. $\eta$ étant le rendement du rotor, la quantité $1 - \eta$ est proportionnelle à la résistance ohmique du circuit. On voit donc que plus cette résistance augmente plus le rendement diminue.

L'invention a plus particulièrement pour objet la réalisation d'un convertisseur de couple en même temps qu'un variateur de vitesse assurant un rendement très supérieur à celui des machines précédemment mentionnées, notamment aux grands rapports de réduction. Elle propose, à cet effet, une machine du type susmentionné qui se caractérise en ce que le rotor intermédiaire comprend q paires d'encoches dont chaque paire est constituée, sur un même rayon, d'une encoche interne, côté rotor, et d'une encoche externe, côté stator, en ce que chaque paire d'encoches loge un bobinage dont les brins externes sont destinés à subir principalement le champ stator et dont les brins internes sont destinés à subir principalement le champ du rotor central et en ce que chaque bobinage est fermé sur un dispositif de commutation comprenant au moins deux commutateurs à conduction unidirectionnelle, montés sur le rotor intermédiaire pour laisser passer respectivement le courant dans un sens ou dans l'autre dans le bobinage, et ce de façon commandée en fonction du sens du champ stator subi par le bobinage, la commande du dispositif de commutation s'effectuant, à l'exclusion de toute bague tournante et de tout balai, à partir d'au moins un capteur de position du rotor intermédiaire par rapport au stator ou au champ résultant des bobines excitatrices du stator et de la réaction d'induit produite dans le rotor intermédiaire, ledit capteur de position étant également intégré audit rotor intermédiaire.

Selon un premier mode d'exécution de l'invention, le rotor intermédiaire comprend q paires d'encoches, dont chaque paire est constituée, sur un même rayon, d'une encoche interne côté rotor et d'une encoche externe côté stator. Chaque paire d'encoches loge un bobinage dont les brins externes sont destinés à subir principalement le champ stator et dont les brins internes sont destinés à subir le champ du rotor central. Chaque bobinage est fermé sur un dispositif de commutation comprenant au moins deux commutateurs à conduction unidirectionnelle, montés sur le rotor intermédiaire pour laisser passer respectivement le courant dans un sens ou dans l'autre dans le bobinage, et ce de façon commandée en fonction du sens du champ stator subi par le bobinage.

Les commutateurs montés sur le rotor intermédiaire ne font pas intervenir de balais ni de bagues tournantes. La résistance du rotor est donc nettement inférieure à celle du rotor des machines de la technique antérieure précédemment mentionnée. Le rendement de la machine selon l'invention est donc meilleur que celui desdites machines connues.

Le nombre s de pôles stator est de 3, 4 ou 6, le rotor cental peut comporter p = 6 à 10 paires de pôles et le rotor intermédiaire peut comporter q paires d'encoches, q étant avantageusement un multiple du nombre de pôles, soit de 2p, par exemple, 3 × 2 × p.

Selon un autre mode d'exécution de l'invention, les encoches intérieures et extérieures du rotor intermédiaire sont respectivement munies d'enroulements intérieur et extérieur distincts.

Dans le cas, l'enroulement intérieur du rotor intermédiaire peut être bobiné à la façon d'un enroulement triphasé classique, tandis que l'enroulement extérieur peut comprendre plusieurs circuits comportant chacun en série plusieurs bobinages en phase par rapport aux pôles du stator. Le courant triphasé, généré à l'intérieur de l'enroulement triphasé, peut être redressé puis transmis aux bobinages de l'enroulement extérieur, par l'intermédiaire d'un dispositif de commutation commandé en fonction de la position du rotor intermédiaire par rapport au stator.

Dans les modes d'exécution précédemment décrits, les dispositifs de commutation peuvent consister en des commutateurs à commande unidirectionnelle pouvant être commandés par un courant de faible intensité, tels que des transistors ou des thyristors. La commande de ces commutateurs peut être faite à partir d'un capteur de position du rotor RT, par rapport au stator F, ou au champ résultant des bobines excitatrices du stator F et de la réaction d'induit produite dans le rotor intermédiaire RT. Des composants à effet Hall peuvent être avantageusement utilisés à cet effet.

Par ailleurs, selon un aspect avantageux de l'invention, le stator F, agencé comme un stator de moteur à courant continu en excitation parallèle, comporte des pôles saillants, et le rotor central RM, agencé comme un rotor d'alternateur d'automobile, comporte des pôles logés.

En outre, la machine peut comporter des moyens pour faire varier sélectivement l'excitation du stator F relativement à l'excitation du rotor central RM.

Dans une variante de réalisation intéressante de l'invention, les susdits dispositifs de commutation comprennent au moins deux paires d'organes à conduction undirectionnelle, montés en pont, dont deux extrémités opposées sont reliées aux extrémités d'enroulement du rotor intermédiaire qui lui est associé, tandis que les deux autres extrémités du pont sont reliées à des bagues, susceptibles de recevoir, par des balais amovibles, une tension continue d'alimentation ; cela permet un fonctionnement de la machine en démarreur à bord d'une automobile (la commande des dispositifs de commutation s'effectuant alors en fonction de la position du rotor central par rapport au rotor intermédiaire). Le fonctionnement en convertisseur de couple s'obtient ensuite en court-circuitant les balais et en commandant les dispositifs de commutation en fonction de la position du rotor intermédiaire par rapport au stator.

D'autres caractéristiques et avantages de l'invention apparaîtront à la lecture de la description détaillée qui va suivre, qui donne, à titre d'exemple non limitatif, divers modes de réalisation de l'invention, en faisant référence aux dessins, sur lesquels :

la fig. 1 illustre schématiquement la structure générale d'une machine selon l'invention ;

la fig. 2 représente schématiquement, en coupe transversale, un autre mode de réalisation possible du rotor central RM de la machine illustrée fig. 1 ;

la fig. 3 illustre un mode de commande de la commutation de conduction d'une bobine du rotor intermédiaire de la machine représentée fig. 1 ;

la fig. 4 est un diagramme temporel qui schématise le fonctionnement de la machine proposée ;

la fig. 5 illustre un mode de commutation d'une bobine du rotor intermédiaire, permettant à la machine de fonctionner en démarreur/génératrice ;

la fig. 6 illustre schématiquement la structure d'une machine selon un autre mode de réalisation de l'invention ;

la fig. 7 est une représentation schématique déroulée de la machine, permettant d'illustrer la façon dont les enroulements du rotor intermédiaire peuvent être réalisés, et

la fig. 8 est un schéma électrique des interconnexions des enroulements du rotor intermédiaire.

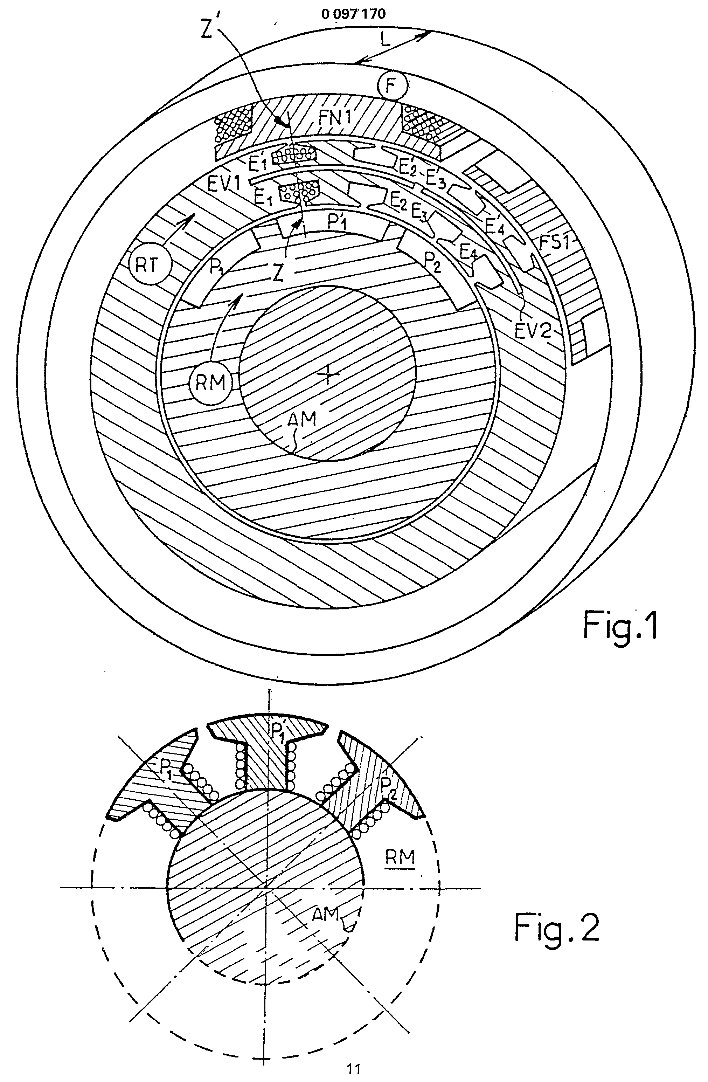

La fig. 1 illustre de manière schématique la structure générale de la machine tournante proposée.

La partie électrique de cette machine est cylindrique de révolution, sur une longueur L.

Son stator fixe F comporte quatre paires de pôles saillants. Pour simplifier le dessin sont seuls illustrés un pôle Nord FN1, et un pôle Sud adjacent FS1. Construit à la manière d'un stator de moteur à courant continu classique, ce stator reçoit une excitation de type shunt.

L'arbre AM est entraîné extérieurement, par un moteur à combustion interne par exemple. Sur cet arbre AM est calé un rotor central RM (ou rotor mu), construit à la manière d'un rotor d'alternateur classique d'automobile. Le rotor central RM comporte ici huit paires de pôles bobinés, partiellement illustrés (P1, P'1, P2, etc.). L'excitation de ce rotor RM de type alternateur est réalisée au bout de l'arbre AM.

Il est à noter que, dans le cas où la machine est destinée à une puissance importante, le rotor RM peut comprendre des pôles saillants bobinés comme représenté fig. 2.

Coaxialement à l'arbre AM, et entre le stator externe F et le rotor central RM, il est prévu un rotor intermédiaire RT (ou rotor transmetteur de mouvement). Ce rotor RT est un anneau en tôle de fer feuilleté, solidaire d'un arbre creux coaxial à l'arbre AM, mais non représenté.

Il comporte sur un même rayon une encoche interne $E_1$ et une encoche externe $E'_1$. 24 paires d'encoches de ce genre sont prévues, régulièrement réparties autour du rotor intermédiaire RT (seule une partie de ces encoches sont représentées, pour alléger l'illustration). De préférence, des évidements axiaux, se présentant en coupe comme des arcs de cercle, sont ménagés entre les encoches internes telles que $E_1$ et $E_2$ et les encoches externes homologues, telles que $E'_1$ et $E'_2$, respectivement. Deux de ces évidements sont représentés en EV1 et EV2.

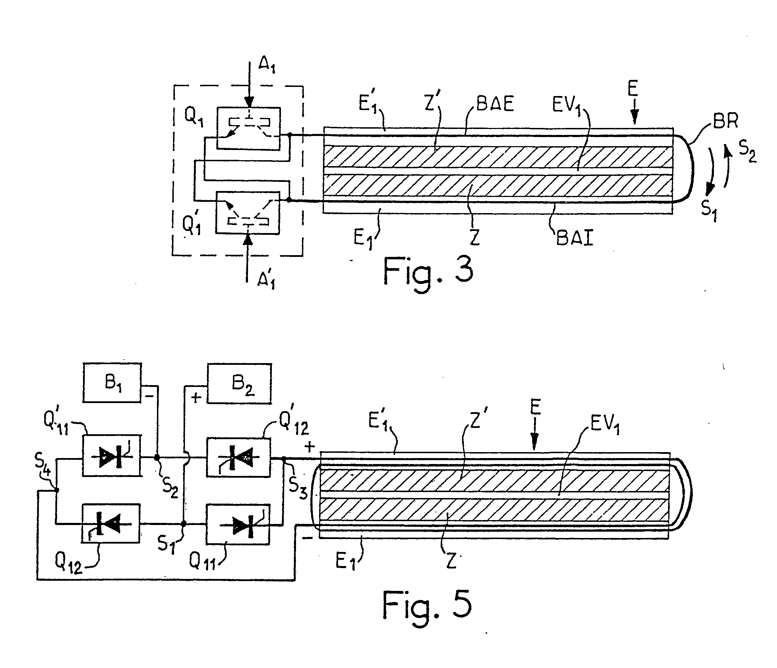

Deux encoches homologues, $E_1$ et $E'_1$ par exemple, reçoivent une bobine E dont chaque spire est définie par un brin principal externe, axial, de longueur L, un autre brin principal interne, également axial et de longueur L, et des brins de raccordement radiaux aux deux extrémités du rotor intermédiaire. Le bobinage est ouvert à l'une des extrémités du rotor intermédiaire RT. Sur la fig. 3, on a supposé, pour simplifier, que ce bobinage se réduit à une seule spire, avec un brin axial externe BAE, un brin de raccordement radial BR, et un brin axial interne BAI.

En partie gauche de la fig. 3 apparaissent les extrémités libres respectives des brins BAE et BAI. Ces extrémités libres sont branchées sur la maille conductrice de puissance de deux commutateurs, à conduction unidirectionnelle, Q1 et Q'1 montés sur le rotor RT. Ces commutateurs sont disposés de telle manière que l'un permette, sur commande, le passage du courant dans un sens, et l'autre dans l'autre sens, à travers le bobinage schématisé sur la fig. 3 par la spire BAE, BR, BAI. Ces commutateurs peuvent consister en des transistors comme représenté en traits interrompus ; l'extrémité libre de BAE est reliée au collecteur du transistor Q'1 et à l'émetteur du transistor Q1 (tous deux de type NPN) ; inversement, l'extrémité libre de BAI est reliée au collecteur de Q1 et à l'émetteur de Q'1. La commande des transistors Q1 et Q'1 (flèches $A_1$ et $A'_1$) est faite à partir d'un capteur de position du rotor RT par rapport au stator F. Le signal de commande, de faible puissance, peut avantageusement être obtenu à partir du champ résultant des bobines excitatrices FN et FS et de la réaction d'induit produite dans le rotor intermédiaire. Ce signal peut, par exemple, être produit au moyen d'un composant à effet Hall classique.

Il est clair que, dans le cas où les deux conducteurs undirectionnels Q1 et Q'1 sont débloqués (état passant), le courant circulant dans les spires du rotor RT aura une allure sinusoïdale de fréquence $p \times N_2$, expression dans laquelle p est le nombre de paires du rotor central et $N_2$ est la différence de vitesse entre la vitesse $N_o$ du rotor central RM et la vitesse $N_1$ du rotor intermédiaire, soit $N_2 = N_o - N_1$. C'est le schéma utilisé lorsqu'on désire transmettre un couple RT = RM, avec un glissement aussi faible que possible. Le rendement est alors égal à $\frac{N_1}{N_o}$. Ce résultat peut notamment être obtenu en l'absence d'excitation des bobinages du stator F.

Par contre, dans le cas où les bobines du stator F se trouvent excitées, lorsque le capteur de position se trouvera par exemple sous le pôle FN, il commandera le passage du courant dans la bobine E correspondante dans le sens $S_1$ (le conducteur Q1 étant passant et le conducteur Q'1 étant bloqué). Inversement, lorsque ce capteur de position se trouvera sous le pôle FS, il commandera le passage du courant dans le sens $S_2$. Bien entendu, le sens de conduction des conducteurs unidirectionnels Q1 et Q'1 sera prévu de telle manière que le sens du courant libéré dans la bobine E corresponde à celui qui fait fonctionner le rotor RT en moteur.

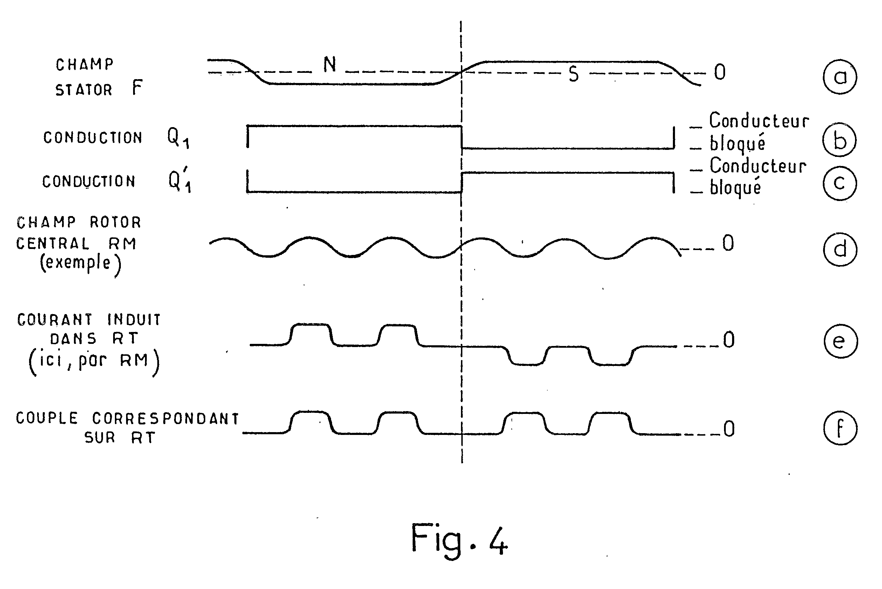

Le mode de fonctionnement précédemment décrit se trouve illustré par la fig. 4 sur laquelle on a représenté:
— en 4a, une période spatiale du champ stator;
— en 4b, la conduction du transistor Q1 pendant que le champ stator est de polarité Nord;
— en 4c, la conduction du transisotr Q'1 pendant que le champ stator est de polarité Sud;
— en 4d, un exemple de forme du champ dû au rotor central RM (la périodicité de ce champ par rapport au champ stator dépend bien entendu de la vitesse à laquelle est entraîné RM);
— en 4e, le courant induit dans RT par ce champ dû à RM, par exemple un courant positif — pour les alternances positives du champ RM — lorsque Q1 conduit, et au contraire un courant négatif (alternances négatives du champ RM) lorsque c'est Q'1 qui conduit.
— enfin, en 4f, le couple exercé sur RT à la suite de l'interaction RM - RT; on notera que la même courbe définit tout aussi bien l'interaction entre le rotor intermédiaire RT et le stator F (du côté des brins externes du bobinage).

Le simple fait que l'encoche E'1 soit près du stator et que E1 soit près du rotor suffit pour privilégier l'interaction E'1-stator (par rapport à E1-stator) et l'interaction E1-rotor RM (par rapport à E'1-rotor RM). Cela étant, les évidements tels que EV1 pratiqués entre E1 et E'1 accentuent la différence.

Le fonctionnement de la machine est alors le suivant:
— Le champ créé par les pôles de signe contraire (P1, P'1) de RM passe par Z, côté interne, donc en E1. Ce champ est variable, et le flux qui traverse Z passe de $+Øo$ à $-Øo$ à chaque rotation relative d'une paire de pôles (P1, P'1) entre RT et RM. Il induit donc une force électromotrice alternative dans la bobine passant dans E1 et E'1. Pour les alternances correspondant au sens de conduction du transistor se trouvant à ce moment actionné, un courant passe dans la bobine. Il en résulte à priori un couple exercé par RM sur RT; mais, le même courant, traversant E'1, va se traduire aussi, si le stator est excité, par un couple exercé par F sur RT (l'agencement étant tel que les deux couples soient de même sens).

Les deux couples vont additionner leurs effets sur le rotor intermédiaire RT.
— Plus précisément, si l'excitation du rotor RT est maximum et l'excitation du stator F nulle, les transistors Q1 et Q'1 sont débloqués et les enroulements En et E'n (n variant de 1 à 16) sont pratiquement en court-circuit. Dans ce cas, RT va tendre à tourner à la même vitesse que RM, moins un glissement dû à l'énergie perdue dans les enroulements, ainsi que dans le fer de RT; le couple exercé sur RT est alors uniquement dû à RM ($C°_T = C°_M$).
— Maintenant, on augmente la vitesse de RM, et l'on excite le stator F. Un couple apparaît alors du fait de l'interaction E'n − F. Mais il naît, en même temps, dans les bobines, une force contre-électromotrice, et l'on ne pourra maintenir l'intensité I qui traverse les bobines avec un glissement plus important de RM par rapport à RT. Le couple total $C_T$ exercé sur RT s'écrit:

$$C_T = C_M + C_F$$

S'il s'agit simplement de maintenir le couple $C_T$ à la valeur $C°_T$, on voit que l'excitation du stator permet de diminuer le couple CM apporté par RM. (Ce couple diminue d'ailleurs naturellement, du fait que l'intensité I dans les bobinages de RT diminue en raison de la force contre-électromotrice du champ stator F.) Par ce moyen, la vitesse de RT (organe entraîné) peut être réglée à une valeur plus faible que celle de RM, en agissant sur l'excitation de F. On peut en particulier avoir CM = 1,3 CF et CT = 3,3 CM. L'énergie perdue est celle dispersée en chaleur dans RT, soit dans le fer, soit dans les enroulements, soit dans les transistors Q1 et Q'1.

On notera, à ce propos, que si l'on inverse le sens du flux dans le stator F, le rotor transmetteur RT fonctionne en marche arrière avec un couple:

$$C_T = C_F - C_M$$

La machine peut donc être montée avec le rotor RM accouplé au moteur d'une automobile, et le rotor RT couplé à la transmission.

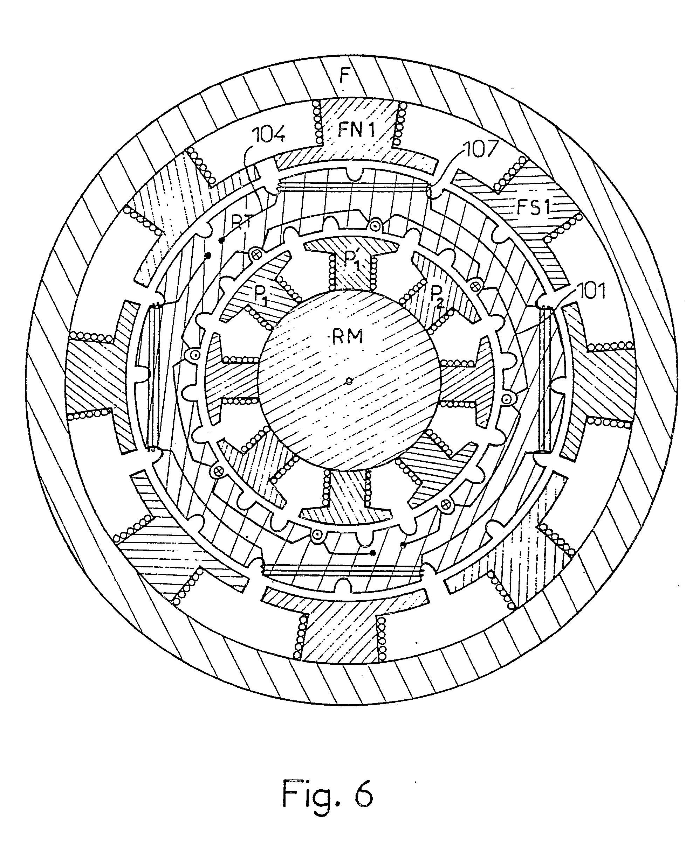

Selon une variante intéressante de l'invention, la machine proposée peut être utilisée en démarreur du moteur de l'automobile, et/ou en génératrice de courant, notamment pour la charge de la batterie d'accumulateur. La fig. 5 illustre schématiquement les modifications nécessaires à cet effet.

Cette variante fait intervenir deux bagues d'amenée de courant $B_1$, $B_2$ montées en bout d'arbre sur le rotor intermédiaire RT et sur lesquelles viennent frotter des balais fixes, susceptibles d'être relevés électromécaniquement lorsqu'on n'utilise pas la machine en démarreur.

Ces deux bagues $B_1$, $B_2$ sont respectivement reliées à un couple de sommets opposés $S_1$, $S_2$

d'un pont de commutateurs unidirectionnels Q11, Q12, Q'11, Q'12 (représentés par des thyristors) et dont les deux autres sommets $S_3$, $S_4$ sont respectivement connectés aux deux extrémités du bobinage E.

Le sens de conduction de ces commutateurs, à l'état passant est le suivant:

Q11 conduit dans le sens $S_1 \rightarrow S_3$
Q12 conduit dans le sens $S_1 \rightarrow S_4$
Q'11 conduit dans le sens $S_4 \rightarrow S_2$, et
Q'12 conduit dans le sens $S_3 \rightarrow S_2$

Les commandes de ces commutateurs sont effectuées par l'intermédiaire de deux circuits de commande distincts commutables, à savoir:

— pour un fonctionnement en convertisseur de couple, un circuit de commande fonctionnant à partir d'un capteur de position du rotor intermédiaire RT par rapport au stator F, et

— pour un fonctionnement en démarreur, un circuit de commande fonctionnant à partir d'un capteur de position du rotor central RM par rapport au rotor intermédiaire RT.

Ces deux circuits de commande sont conçus de telle manière que, suivant la position du rotor intermédiaire RT par rapport au stator F ou par rapport au rotor central RM, seront conducteurs soit les commutateurs Q11 et Q'11, soit les commutateurs Q12 et Q'12.

Le fonctionnement en démarreur s'obtient en mettant les balais sur les bagues $B_1$ et $B_2$ pour les alimenter en tension continue + et −. L'ensemble formé par le rotor central RM et le rotor intermédiaire RT se comporte alors comme un moteur électrique à courant continu, de structure inversée.

Le fonctionnement en convertisseur de couple s'obtient en court-circuitant les bagues $B_1$ et $B_2$ de manière à retrouver un fonctionnement analogue à celui précédemment décrit, dans lequel les deux commutateurs Q11 et Q'11 en série jouent le rôle du commutateur Q1 et les commutateurs Q12 et Q'12 en série jouent le rôle du commutateur Q'1. Cette solution s'avère avantageuse en dépit du léger accroissement des pertes ohmiques dues au fait que l'on met deux commutateurs en série.

Dans les exemples précédemment décrits, on utilisait, pour chacune des bobines E du rotor intermédiaire RT, un dispositif de commutation formé par les commutateurs Q1, Q'1 ou Q11, Q12, Q'11, Q'12. Il convient de noter que ce nombre de dispositifs de commutation peut être considérablement réduit.

En effet, le nombre d'encoches En, E'n étant un multiple de 2p, par exemple k × 2p, p encoches se trouvent en identité de phase et p encoches en opposition de phase. On peut donc mettre, par un branchement alterné convenable, 2p encoches en série. Il suffit, dans ce cas, de k dispositifs de commutation indépendants.

On notera en outre que, étant donné l'importance du coefficient de self induction des bobines E, l'interruption du courant par les commutateurs devra se faire au point de débit nul du courant alternatif. Ce résultat peut être commodément obtenu par l'emploi de thyristors pour la réalisation des éléments de commutation.

Pour l'utilisation en générateur, il suffit de prélever, au cours du fonctionnement en convertisseur de couple de la machine, une partie du courant redressé circulant dans les bobines E, au moyen de balais venant s'appliquer sur deux bagues respectives du rotor intermédiaire RT.

Dans les machines telles que celle précédemment décrite, il apparaît que les conducteurs du rotor intermédiaire ne sont actifs que pendant la moitié du temps. Or, les pertes ohmiques sont proportionnelles au carré du débit instantané. Les valeurs moyennes augmentent donc plus vite que le débit moyen, c'est-à-dire le couple.

La variante de réalisation représentée fig. 6 permet de remédier à cet inconvénient. Selon cette variante, les spires du rotor intermédiaire ne sont plus bobinées autour de $E_1$, $E'_1$. En effet, on prévoit, sur le rotor intermédiaire, trois encoches intérieures par pôle du rotor central RM et on réalise dans ces encoches un bobinage triphasé classique. Dans l'exemple représenté, le rotor central RM comprend huit pôles bobinés et le rotor intermédiaire comprend, en conséquence, 24 encoches intérieures. Pour plus de clarté, on n'a représenté schématiquement, sur ce dessin, qu'un seul enroulement correspondant à une phase, les signes ⊙ et ⊕ permettant d'indiquer le sens de l'enroulement. Les autres enroulements (non figurés) se présentent d'une façon analogue, mais respectivement décalés d'une encoche.

Le nombre d'encoches extérieures n'est pas forcément le même que celui des encoches intérieures. Il est essentiellement fonction du nombre de paires de pôles du stator F. Toutefois, pour des raisons de commodité, on a représenté un stator F à quatre paires de pôles bobinés et un rotor intermédiaire RT comprenant 16 encoches extérieures (à savoir deux encoches par pôle du stator F).

Sur ces encoches sont bobinés trois circuits comprenant chacun quatre bobinages disposés en série et qui se trouvent en phase par rapport aux pôles du stator (sur la fig. 6 on n'a représenté qu'un seul de ces circuits dont les enroulements se trouvent disposés au droit de chacun des pôles Nord du stator). Les deux autres circuits se présentent d'une façon analogue mais décalés d'une encoche.

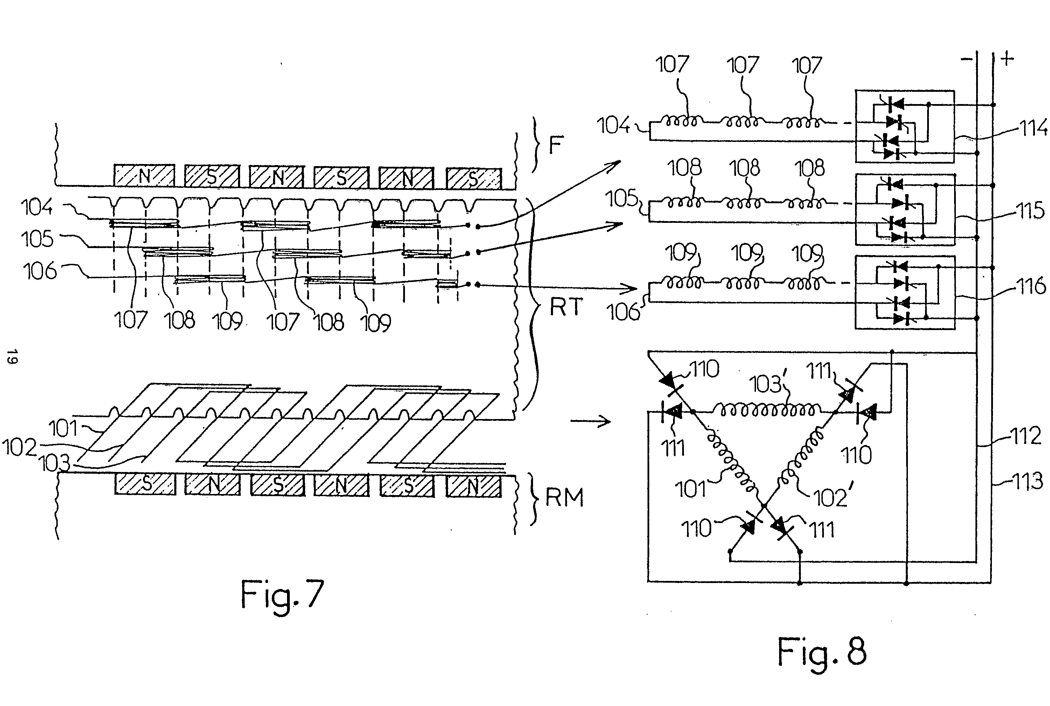

La fig. 7 représente schématiquement, en vue partielle développée, le rotor intermédiaire RT entre le rotor central RM et le stator F. Ce dessin permet de mettre en évidence le bobinage triphasé monté dans les encoches intérieures du rotor intermédiaire RT (fils 101, 102, 103) et les trois groupes de bobinages en série 104, 105, 106 (décalés pour plus de clarté) montés dans les encoches extérieures de ce même rotor intermédiaire RT.

Comme on peut le voir sur la fig. 8, le schéma électrique équivalent au bobinage triphasé consiste en un montage de trois enroulements 101', 102', 103', disposés en triangle, tandis que le circuit équivalent au bobinage des encoches extérieures du rotor intermédiaire consiste en trois circuits indépendants 104', 105', 106', comprenant chacun quatre bobines en série 107, 108, 109 (dont seulement trois ont été représentées pour chaque circuit).

Le courant triphasé produit par le bobinage 101', 102', 103', monté sur les encoches intérieures du rotor intermédiaire RT, est redressé au moyen d'un montage faisant intervenir deux diodes inversées 110, 111' pour chacun des sommets du triangle formé par les bobinages 101', 102', 103' et respectivement reliées à deux conducteurs 112, 113 assurant la liaison entre les bobinages intérieurs 101, 102, 103 et extérieurs 107, 108, 109 du rotor RT.

Ces conducteurs 112, 113 assurent l'alimentation des trois circuits indépendants 104, 105, 106 du bobinage extérieur du rotor RT, par l'intermédiaire d'un circuit de commutation 114, 115, 116 capable soit d'inverser le sens du passage du courant dans les bobines 107, 108, 109 du circuit 104, 105, 106 correspondant, en fonction de la position du rotor RT par rapport au stator F, soit d'interrompre tout simplement ce courant périodiquement en fonction de ladite position.

Il est clair que, dans ce mode de réalisation, le fonctionnement de la machine en génératrice de courant peut être facilement obtenu en reliant les conducteurs 112 et 113 à deux bagues montées sur le rotor intermédiaire RT et sur lesquelles viennent frotter des balais.

Par ailleurs, on rappelle que le principe général de la machine selon l'invention, consiste à prévoir, au niveau de la face interne du rotor intermédiaire RT, un ou plusieurs circuits électriques primaires dans lequel s'établit, sous l'effet du champ du rotor central, un courant électrique et, au niveau de la face externe du rotor intermédiaire, un ou plusieurs circuits électriques secondaires, alimentés de façon commandée (en sens et en commutation) à partir du ou des circuits électriques primaires, la commande de l'alimentation du ou des circuits secondaires s'effectuant de telle manière que le couple engendré par le champ stator F sur le ou les circuits secondaires vienne s'ajouter au couple engendré par le champ du rotor central RM sur le ou les circuits primaires.

Dans les modes d'exécution précédemment décrits, on a illustré deux exemples de réalisaton de ces circuits primaires et secondaires.

Dans le mode de réalisation représenté fig. 1 à 4, la machine comprend autant de circuits primaires et secondaires qu'il y a de paires d'encoches intérieure-extérieure sur le rotor intermédiaire. Les circuits primaires sont alors constitués par les conducteurs de chacune des bobines E passant dans les encoches intérieures et les circuits secondaires consistent en les conducteurs de chacune des bobines E passant dans les encoches extérieures.

Dans le mode d'exécution représenté fig. 6 à 8, les circuits primaires consistent en les trois enroulements du bobinage triphasé, tandis que les circuits secondaires consistent en les trois circuits indépendants comprenant chacun les quatre bobines montées en série qui se trouvent en phase par rapport aux pôles du stator.

Il est clair que l'invention ne se limite pas à ces deux modes de réalisation des circuits primaire et secondaire du rotor intermédiaire RT.

## Revendications

1. Machine électrique tournante comprenant en combinaison:
 — un stator (F) à s paires de pôles;
 — un rotor central (RM) à p paires de pôles, et
 — un rotor intermédiaire (RT) comprenant, au niveau de sa face intérieure, au moins un circuit électrique primaire subissant le champ du rotor central (RM), et, au niveau de sa face extérieure, au moins un circuit électrique secondaire subissant le champ du stator,
caractérisée en ce que le rotor intermédiaire comprend q paires d'encoches dont chaque paire est constituée, sur un même rayon, d'une encoche interne, côté rotor (RM), et d'une encoche externe, côté stator (F), en ce que chaque paire d'encoches loge un bobinage (E) dont les brins externes (BAE) sont destinés à subir principalement le champ du stator (F) et dont les brins internes (BAI) sont destinés à subir le champ du rotor central (RM), et en ce que chaque bobinage (E) est fermé sur un dispositif de commutation comprenant au moins deux commutateurs à conduction unidirectionnelle (Q1, Q'1), montés sur le rotor intermédiaire (RT) pour laisser passer respectivement le courant dans un sens ou dans l'autre dans le bobinage (E), et ce de façon commandée en fonction du sens du champ statorique subi par le bobinage (E), la commande du dispositif de commutation s'effectuant à l'exclusion de toute bague tournante et de tout balai, à partir d'au moins un capteur de position du rotor intermédiaire (RT) par rapport au stator (F) ou au champ résultant des bobines excitatrices du stator (F) et de la réaction d'induit produite dans le rotor intermédiaire (RT), ledit capteur de position étant également intégré audit rotor intermédiaire.

2. Machine selon la revendication 1, caractérisée en ce que les bobinages (E) se trouvant en identité de phase vis-à-vis des pôles du stator (F) sont montés en série et sont commandés par un seul dispositif de commutation.

3. Machine selon la revendication 1, caractérisée en ce que les encoches extérieures et intérieures du rotor intermédiaire sont respectivement munies d'enroulements intérieurs et extérieurs distincts.

4. Machine selon la revendication 3, caractérisée en ce que l'enroulement intérieur du rotor intermédiaire (RT) est bobiné à la façon d'un enroulement triphasé classique (101, 102, 103), en ce que l'enroulement extérieur comprend plusieurs circuits (104, 105, 106) comportant chacun plusieurs bobinages (107, 108, 109) montés en série et qui se trouvent en phase par rapport aux pôles du stator (F), et en ce que le courant triphasé généré à l'intérieur de l'enroulement triphasé (101, 102, 103) est redressé puis transmis aux bobinages (107, 108, 109) de l'enroulement extérieur, par l'intermédiaire d'un dispositif de commutation (114, 115, 116) monté dans le rotor et commandé en fonction de la position du rotor intermédiaire (RT) par rapport au stator (F).

5. Machine selon l'une des revendications précédentes, caractérisée en ce que les susdits dispositifs de commutation (Q1, Q'1, 114, 115, 116) consistent en des commutateurs à commande directionnelle pouvant être commandés par des courants de faible intensité, tels que des transistors ou des thyristors.

6. Machine selon la revendication 5, caractérisée en ce que la commande des susdits dispositifs de commutation s'effectue par l'intermédiaire de composants à effet Hall.

7. Machine selon l'une des revendications 1 ou 2, caractérisée en ce que, en vue de permettre un fonctionnement de la machine en démarreur à bord d'un véhicule automobile, les susdits dispositifs de commutation comprennent au moins deux paires d'organes à conduction unidirectionnelle (Q11, Q12, Q'11, Q'12), montés en pont, dont deux extrémités opposées ($S_3$, $S_4$) sont reliées aux extrémités de l'enroulement du rotor intermédiaire (RT) qui lui est associé, tandis que les deux autres extrémités du pont ($S_1$, $S_2$) sont reliées à des bagues ($B_1$, $B_2$) susceptibles de recevoir, par des balais amovibles, une tension continue d'alimentation, la commande des dispositifs de commutation s'effectuant alors en fonction de la position du rotor central (RM) par rapport au rotor intermédiaire (RT), et en ce que, dans ce cas, le fonctionnement en convertisseur de couple s'obtient en court-circuitant les balais et en commandant les dispositifs de commutation en fonction de la position du rotor intermédiaire (RT) par rapport au stator (F).

8. Machine selon l'une des revendications précédentes, caractérisée en ce que, en vue d'utiliser la machine en générateur de courant, on prélève, grâce à des bagues et des balais additionnels, une fraction du courant redressé induit dans le rotor intermédiaire (RT) par le rotor central (RM), lors du fonctionnement en convertisseur de couple de la machine.

9. Machine selon l'une des revendications précédentes servant de convertisseur de couple à bord d'un véhicule automobile, caractérisée en ce que le rotor central (RM) est accouplé au moteur de l'automobile et le rotor intermédiaire (RT) est couplé à la transmission.

## Patentansprüche

1. Elektrische Maschine mit
— einem Stator (F) mit s Paaren von Polen;
— einem Mittelrotor (RM) mit p Paaren von Polen, und
— einem Zwischenrotor (RT), der in Höhe seiner Innenfläche mindestens einen Primärstromkreis im Einflussbereich des Mittelrotors (RM) und in Höhe seiner Aussenfläche mindestens einen Sekundärstromkreis im Einflussbereich des elektrischen Feldes des Stators aufweist,
dadurch gekennezeichnet, dass der Zwischenrotor q Paare von Aussparungen aufweist, von denen jedes Paar auf demselben Halbmesser auf der Seite des Rotors (RM) eine innenliegende Aussparung und auf der Seite des Stators (F) eine aussenliegende Aussparung aufweist; dass in jedes Paar Aussparungen eine Spule (E) eingesetzt ist, deren aussenliegende Litzen (BAE) in erster Linie zur Beeinflussung durch das elektrische Feld des Stators (F) vorgesehen sind, während die innenliegenden Litzen (BAI) zur Beeinflussung durch das elektrische Feld des Mittelrohrs (RM) vorgesehen sind; und dass jede Spule (E) auf einer Stromwendevorrichtung auf «Ein» geschaltet ist, welche mindestens zwei Stromwender mit Stromführung in einer Richtung (Q1, Q'1) aufweist, welche auf dem Zwischenrotor (RT) so angeordnet sind, dass sie den Strom jeweils in die eine oder die andere Richtung in die Spule (E) fliessen lassen, und zwar gesteuert in Abhängigkeit von der Richtung des in der Spule (E) durch den Stator induzierten Feldes, wobei die Steuerung der Stromwendevorrichtung unter Ausschluss jedes Drehringes und jedes Schleifkontaktes erfolgt, und zwar unter Abgriff von mindestens einem Fühler zur Erfassung der Stellung des Zwischenrotors (RT) gegenüber dem Stator (F), bzw. von dem von den Erregerspulen des Stators (F) erzeugten Feld und der Induktionsreaktion, die im Zwischenrotor (RT) erzeugt wird, wobei der Positionsfühler daneben in den Zwischenrotor integriert ist.

2. Maschine nach Anspruch 1, dadurch gekennzeichnet, dass die Spulen (E), die phasengleich mit den Polen des Stators (F) sind, in Reihe geschaltet sind und durch eine einzige Stromwendevorrichtung gesteuert werden.

3. Maschine nach Anspruch 1, dadurch gekennzeichnet, dass die aussen- und innenliegenden Aussparungen des Rotors jeweils mit getrennten innen- und aussenliegenden Wicklungen versehen sind.

4. Maschine nach Anspruch 3, dadurch gekennzeichnet, dass die innenliegende Wicklung des Zwischenrotors (RT) in der Art einer herkömmlichen Drehstromwicklung (101, 102, 103) gewickelt ist; dass die aussenliegende Wicklung mehrere Stromkreise (104, 105, 106) aufweist, welche jeweils mehrere in Reihe geschaltete Wicklungen (107, 108, 109) umfassen, die phasengleich mit den Polen des Stators (F) sind; und dass der in der Drehstromwicklung (101, 102, 103) erzeugte Drehstrom gleichgerichtet und anschliessend an die Wicklungen (107, 108, 109) der aussenliegenden Wicklung über eine Stromwendevorrichtung (114, 115, 116) geleitet wird, welche im Rotor angeordnet ist und in Abhängigkeit von der Stellung des Zwischenrotors (RT) gegenüber dem Stator (F) gesteuert wird.

5. Maschine nach einem der vorhergehenden Ansprüche, dadurch gekennzeichnet, dass die Stromwendevorrichtungen (Q1, Q'1, 114, 115, 116) aus richtungsabhängig gesteuerten Stromwendern bestehen, welche durch schwache Ströme, beispielsweise durch Transistoren bzw. Thyristoren, steuerbar sind.

6. Maschine nach Anspruch 5, dadurch gekennzeichnet, dass die Steuerung der Stromwendevorrichtungen mittels Bauteilen mit Hall-Effekt erfolgt.

7. Maschine nach Anspruch 1 oder 2, dadurch gekennzeichnet, dass zur Erzielung einer Startfunktion der Maschine an Bord eines Kraftfahrzeugs die Stromwendevorrichtungen mindestens zwei Paare von in einer Richtung wirksamen und in Brückenschaltung liegenden Stromleitelementen (Q11, Q12, Q'11, Q'12) aufweisen, deren einander gegenüberliegenden Enden (S3, S4) mit den Enden der Wicklung des zugeordneten Zwischenrotors (RT) verbunden sind, während die beiden anderen Enden der Brücke (S1, S2) mit Ringen (B1, B2) verbunden sind, welche über unbewegliche Kontaktelemente eine Versorgungsgleichspannung aufnehmen können, wobei die Steuerung der Stromwendevorrichtungen nun in Abhängigkeit von der Stellung des Mittelrotors (RM) gegenüber dem Zwischenrotor (RT) erfolgt, und dass in diesem Fall die Funktionsweise als Drehmomentwandler unter Kurzschliessung der Kontaktelemente und unter Steuerung der Stromwendevorrichtungen in Abhängigkeit von der Stellung des Zwischenrotors (RT) gegenüber dem Stator (F) erzielt wird.

8. Maschine nach einem der vorhergehenden Ansprüche, dadurch gekennzeichnet, dass zur Verwendung der Maschine als Stromgenerator dank der Ringe und zusätzlichen Kontaktelemente ein Teil des vom Mittelrotor (RM) im Zwischenrotor (RT) induzierten und gleichgerichteten Stromes bei Betrieb der Maschine als Drehmomentwandler abgegriffen wird.

9. Maschine nach einem der vorhergehenden Ansprüche, bei Verwendung als Drehmomentwandler an Bord eines Kraftfahrzeugs, dadurch gekennzeichnet, dass der Mittelrotor (RM) an den Fahrzeugmotor angekoppelt ist, während der Zwischenrotor (RT) mit dem Getriebe verbunden ist.

**Claims**

1. A rotary electrical machine comprising in combination:
  — a stator (F) having s pairs of poles;
  — a central rotor (RM) having p pairs of poles; and
  — an intermediate rotor (RT) comprising, at the location of its inward face, at least one primary electrical circuit which is subjected to the field of the central rotor (RM) and, at the location of its outward face, at least one secondary electrical circuit which is subjected to the field of the stator, characterized in that the intermediate rotor comprises q pairs of slots, each pair of which is formed, on the same radius, by an inward slot, on the rotor (RM) side, and an outward slot, on the stator (F) side, in that each pair of slots houses a coil (E) wherein outward wires (BAE) are intended to be subjected primarily to the stator (F) field and the inward wires (BAI) are intended to be subjected to the field of the central rotor (RM), and in that each coil (E) is closed to a switching device comprising at least two unidirectionally conducting switches (Q1, Q'1) mounted on the intermediate rotor (RT) to allow the current to pass respectively in one direction or the other in the coil (E), controlled in dependence on the direction of the stator field to which the coil (E) is subjected, control of the switching device being effected with the exclusion of any rotary ring and any brush, from at least one position detector for the intermediate rotor (RT) with respect to the stator (F) or the field resulting from the excitation coils of the stator (F) and the armature reaction produced in the intermediate rotor (RT), said position detector also being integrated in said intermediate rotor.

2. A machine according to Claim 1, characterized in that the coils (E) which are in a condition of phase identity with respect to the poles of the stator (F) are mounted in series and are controlled by a single switching device.

3. A machine according to Claim 1, characterized in that the inward and outwart slots of the intermediate rotor are respectively provided with separate inward and outward windings.

4. A machine according to Claim 3, characterized in that the inward winding of the intermediate rotor (RT) is wound in the manner of a conventional three-phase winding (101, 102, 103), in that the outward winding comprises a plurality of circuits (104, 105, 106), each comprising a plurality of coils (107, 108, 109) mounted in series and which are in phase with respect to the poles of the stator (F), and in that the three-phase current generated within the three-phase winding (101, 102, 103) is rectified and then transmitted to the coils (107, 108, 109) of the outward winding, by way of a switching device (114, 115, 116) mounted in the rotor and controlled in dependence on the position of the intermediate rotor (RT) with respect to the stator (F).

5. A machine according to one of the preceding claims, characterized in that said switching devices (Q1, Q'1, 114, 115, 116) consist of directional-control switches which can be controlled by low-strength currents such as transistors or thyristors.

6. A machine according to Claim 5, characterized in that control of said switching devices is effected by means of Hall-effect components.

7. A machine according to one of Claims 1 or 2, characterized in that, in order to permit operation of the machine as a starter on a motor vehicle, said switching devices comprise at least two pairs of unidirectionally conductive members (Q11, Q12, Q'11, Q'12) which are mounted in a bridge configuration of which two opposite ends (S3, S4) are connected to the ends of the winding of the intermediate rotor (RT) which is associated therewith while the other two ends of the bridge (S1, S2) are connected to rings (B1, B2) which, by way of removable brushes, are capable or receiving a d.c. supply voltage, control of the switching devices then being effected in dependence on the position of the central rotor (RM) with respect to the intermediate rotor (RT), and in that in that case the mode of operation as a torque converter is achieved by short-circuiting the brushes and by controlling the switching devices in dependence on the position of the intermediate rotor (RT) with respect to the stator (F).

8. A machine according to one of the preceding claims, characterized in that, in order to use the machine as a current generator, by means of additional brushes and rings a fraction of the rectified current induced in the intermediate rotor (RT) by the central rotor (RM), when the machine operates in the torque converter mode, is taken off.

9. A machine according to one of the preceding claims serving as a torque converter on board a motor vehicle, characterized in that the central rotor (RM) is coupled to the engine of the motor vehicle and the intermediate rotor (RT) is coupled to the transmission.

9

Fig.1

Fig.2

Fig. 3

Fig. 5

Fig. 4

Fig. 6

Fig. 7

Fig. 8

0 097 170